# EUROPEAN PATENT APPLICATION

(11) **EP 1 855 220 A2**
(43) Date of publication of application: **14.11.2007**
(21) Application number: 07251921.8
(22) Date of filing: 08.05.2007
(51) Int. Cl.: G06F 17/30

(54) **System and method for managing records through establishing semantic coherence of related digital components including the identification of the digital components using templates**

(30) Priority: 05.05.2006 US 797754 P; 24.05.2006 US 802875 P; 04.05.2007 US
(71) Applicant: Lockheed Martin Corporation, Bethesda, Maryland 20817 (US); Fenestra Technologies Corporation, Germantown Maryland 20874 (US); Tessella Inc, Suite 300 Newton MA 02464 (US); Hunter Information Management Services, Inc., Mineola, NY 11501-1518 (US)
(72) Inventor: Robinson, Fred Y., Bethesda, MD 20817 (US); Ripley, Rodney J., Silverspring, MD 20905 (US); Rogers IV, Roy S., Middletown, MD 21769 (US); McKennirey, Matthew J., Bethesda, MD 20814 (US); Evans, Mark J., Silver Spring, MD 20902 (US); Hunter, Gregory S., Mineola, New York 11501-1518 (US)
(74) Representative: Strachan, Victoria Jane

(57) **Abstract**

A method for managing electronic records is provided. Each electronic record includes a data file, a plurality of data files, a portion of a data file, or portions of a plurality of data files. The electronic records include a plurality of record types and data file types. The method includes forming a data file set comprising one or more logically related data files; identifying attributes of each record type in a record type template; identifying specifications of each data file type in a data file type template; and extracting digital components from the data file set. The extracted digital components relate to the attributes in each record type template and the specifications in each data file type template and compose an individual record. The templates reference are mapped and related across a hierarchical and networked taxonomy. Analyzing semantic coherence within a given template taxonomy allows records to be defined, delineated and managed. An electronic record archive includes record type and data file type templates and a digital component extractor.

## Description

### CROSS-REFERENCES TO RELATED APPLICATIONS

This application claims the benefit of U.S. Applications 60/802,875, filed May 24, 2006, and 60/797,754, filed May 5, 2006, each of which is incorporated herein by reference in its entirety.

### FIELD OF THE INVENTION

The example embodiments disclosed herein relate to systems and methods for managing records through establishing semantic coherence of related digital components including the identification of the digital components using templates.

### BACKGROUND AND SUMMARY OF THE INVENTION

Since the earliest history, various institutions (e.g., governments and private companies alike) have recorded their actions and transactions. Subsequent generations have used these archival records to understand the history of the institution, the national heritage, and the human journey. These records may be essential to support the efficiency of the institution, to protect the rights of individuals and businesses, and/or to ensure that the private company or public corporation/company is accountable to its employees/shareholders and/or that the Government is accountable to its citizens.

With the advance of technology into a dynamic and unpredictable digital era, evidence of the acts and facts of institutions and the government and our national heritage are at risk of being irrecoverably lost. The challenge is pressing - as time moves forward and technologies become obsolete, the risks of loss increase. It will be appreciated that a need has developed in the art to develop an electronic records archives system and method especially, but not only, for the National Archives and Records Administration (NARA) in a system known as Electronic Records Archives (ERA), to resolve this growing problem, in a way that is substantially obsolescence-proof and policy neutral. While embodiments of the invention will be described with respect to its application for safeguarding government records, the described embodiments are not limited to archives systems applications nor to governmental applications and can also be applied to other large scale storage applications, in addition to archives systems, and for businesses, charitable (e.g., non-profit) and other institutions, and entities.

One aspect of the invention is directed to an architecture that will support operational, functional, physical, and interface changes as they occur. In one example, a suite of commercial off-the-shelf (COTS) hardware and software products has been selected to implement and deploy an embodiment of the invention in the ERA, but the inventive architecture is not limited to these products. The architecture facilitates seamless COTS product replacement without negatively impacting the ERA system.

Another aspect of the ERA is to preserve and to provide ready access to authentic electronic records of enduring value.

In one embodiment, the ERA supports and flows from NARA's mission to ensure "for the Citizen and the Public Servant, for the President and the Congress and the Courts, ready access to essential evidence." This mission facilitates the exchange of vital ideas and information that sustains the United States of America. NARA is responsible to the American people as the custodian of a diverse and expanding array of evidence of America's culture and heritage, of the actions taken by public servants on behalf of American citizens, and of the rights of American citizens. The core of NARA's mission is that this essential evidence must be identified, preserved, and made available for as long as authentic records are needed - regardless of form.

The creation and use of an unprecedented and increasing volume of Federal electronic records - in a wide variety of formats, using evolving technologies - poses a problem that the ERA must solve. An aspect of the invention involves an integrated ERA solution supporting NARA's evolving business processes to identify, preserve, and make available authentic, electronic records of enduring value - for as long as they are needed.

In another embodiment, the ERA can be used to store, process, and/or disseminate a private institution's records. That is, in an embodiment, the ERA may store records pertaining to a private institution or association, and/or the ERA may be used by a first entity to store the records of a second entity. System solutions, no matter how elegant, may be integrated with the institutional culture and organizational processes of the users.

Since 1934, NARA has developed effective and innovative processes to manage the records created or received, maintained or used, and destroyed or preserved in the course of public business transacted throughout the Federal Government. NARA played a role in developing this records lifecycle concept and related business processes to ensure long-term preservation of, and access to, authentic archival records. NARA also has been instrumental in developing the archival concept of an authentic record that consists of four fundamental attributes: content, structure, context, and presentation.

NARA has been managing electronic records of archival value since 1968, longer than almost anyone in the world. Despite this long history, the diverse formats and expanding volume of current electronic records pose new challenges and opportunities for NARA as it seeks to identify records of enduring value, preserve these records as vital evidence of our nation's past, and make these records accessible to citizens and public servants in accordance with statutory requirements.

The ERA should support, and may affect, the institution's (e.g., NARA's) evolving business processes. These business processes mirror the records lifecycle and are embodied in the agency's statutory authority:
- Providing guidance to Federal Agencies regarding records creation and records management;
- Scheduling records for appropriate disposition;
- Storing and preserving records of enduring value; and/or
- Making records available in accordance with statutory and regulatory provisions.

Within this lifecycle framework, the ERA solution provides an integrated and automated capability to manage electronic records from: the identification and capture of records of enduring value; through the storage, preservation, and description of the records; to access control and retrieval functions.

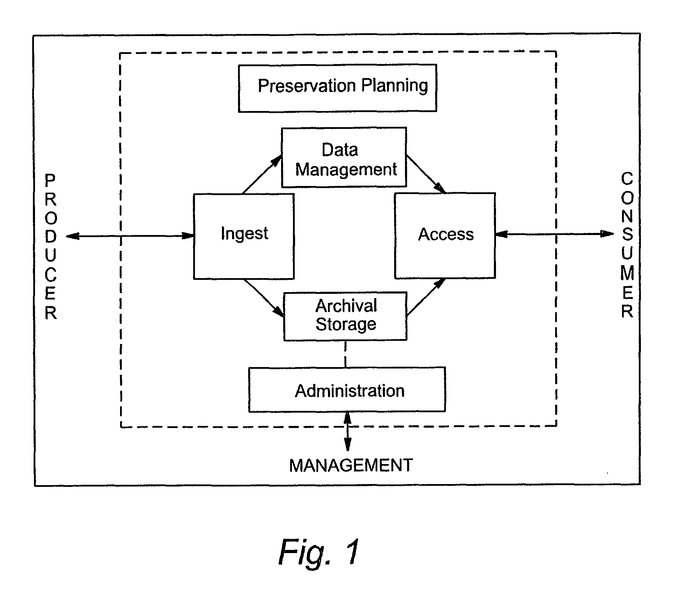

Developing the ERA involves far more than just warehousing data. For example, the archival mission is to identify, preserve, and make available records of enduring value, regardless of form. This three-part archival mission is the core of the Open Archival Information System (OAIS) Reference Model, expressed as ingest, archival storage, and access. Thus, one ERA solution is built around the generic OAIS Reference Model (presented in Figure 1), which supports these core archival functions through data management, administration, and preservation planning.

The ERA may coordinate with the front-end activities of the creation, use, and maintenance of electronic records by Federal officials. This may be accomplished through the implementation of disposition agreements for electronic records and the development of templates or schemas that define the content, context, structure, and presentation of electronic records along with lifecycle data referring to these records.

The ERA solution may complement NARA's other activities and priorities, e.g., by improving the interaction between NARA staff and their customers (in the areas of scheduling, transfer, accessioning, verification, preservation, review and redaction, and/or ultimately the ease of finding and retrieving electronic records).

Like NARA itself, the scope of ERA includes the management of electronic and non-electronic records, permanent and temporary records, and records transferred from Federal entities as well as those donated by individuals or organizations outside of the government. Each type of record is described and/or defined below.

*ERA and Non-Electronic Records:* Although the focus of ERA is on preserving and providing access to authentic electronic records of enduring value, the system's scope also includes, for example, management of specific lifecycle activities for non-electronic records. ERA will support a set of lifecycle management processes (such as those used for NARA) for appraisal, scheduling, disposition, transfer, accessioning, and description of both electronic and non-electronic records. A common systems approach to appraisal and scheduling through ERA will improve the efficiency of such tasks for non-electronic records and help ensure that permanent electronic records are identified as early as possible within the records lifecycle. This same common approach will automate aspects of the disposition, transfer, accessioning, and description processes for all types of records that will result in significant workflow efficiencies. Archivists, researchers, and other users may realize benefits by having descriptions of both electronic and non-electronic records available together in a powerful, universal catalog of holdings. In an embodiment, some of ERA's capabilities regarding non-electronic records may come from subsuming the functionality of legacy systems such the Archival Research Catalog (ARC). To effectively manage lifecycle data for all types of records, in certain embodiments, ERA also may maintain data interchange (but not subsume) other legacy systems and likely future systems related to non-electronic records.

*Permanent and Temporary Records:* There is a fundamental archival distinction between records of enduring historic value, such as those that NARA must retain forever (e.g., permanent records) and those records that a government must retain for a finite period of time to conduct ongoing business, meet statutory and regulatory requirements, or protect rights and interests (e.g., temporary records).

For a particular record series from the US Federal Government, NARA identifies these distinctions during the record appraisal and scheduling processes and they are reflected in NARA-approved disposition agreements and instructions. Specific records are actually categorized as permanent or temporary during the disposition and accessioning processes. NARA takes physical custody of all permanent records and some temporary records, in accordance with approved disposition agreements and instructions. While all temporary records are eventually destroyed, NARA ultimately acquires legal (in addition to physical) custody over all permanent records.

ERA may address the distinction between permanent and temporary records at various stages of the records life-cycle. ERA may facilitate an organization's records appraisal and scheduling processes where archivists and transferring entities may use the system to clearly identify records as either permanent or temporary in connection with the development and approval of disposition agreements and instructions. The ERA may use this disposition information in association with the templates to recognize the distinctions between permanent and temporary records upon ingest and manage these records within the system accordingly.

For permanent records this may involve transformation to persistent formats or use of enhanced preservation techniques to insure their preservation and accessibility forever. For temporary records, NARA's Records Center Program (RCP) is exploring offering its customers an ERA service to ingest and store long-term temporary records in persistent formats. To the degree that the RCP opts to facilitate their customers' access to the ERA for appropriate preservation of long-term temporary electronic records, this same coordination relationship with transferring entities through the RCP will allow NARA to effectively capture permanent electronic records earlier in the records lifecycle. In the end, ERA may also provide for the ultimate destruction of temporary electronic records.

*ERA and Donated Materials:* In addition to federal records, NARA also receives and accesses donated archival materials. Such donated collections comprise a significant percentage of NARA's Presidential Library holdings, for example. ERA may manage donated electronic records in accordance with deeds of gift of deposit agreements which, when associated with templates, may ensure that these records are properly preserved and made available to users. Although donated materials may involve unusual disposition instructions or access restrictions, ERA should be flexible enough to adapt to these requirements. Since individuals or institutions donating materials to NARA are likely to be less familiar with ERA than federal transferring entities, the system may also include guidance and tools to help donors and the NARA appraisal staff working with them insure proper ingest, preservation, dissemination of donated materials.

Systems are designed to facilitate the work of users, and not the other way around. One or more of the following illustrative classes of users may interact with the ERA: transferring entity; appraiser; records processor; preserver; access reviewer; consumer; administrative user; and/or a manager. The ERA may take into account data security, business process re-engineering, and/or systems development and integration. The ERA solution also may provide easy access to the tools the users need to process and use electronic records holdings efficiently.

NARA must meet challenges relating to archival of massive amounts of information, or the American people risk losing essential evidence that is only available in the form of electronic federal records. But beyond mitigating substantial risks, the ERA affords such opportunities as:
- Using digital communication tools, such as the Internet, to make electronic records holdings, such as NARA's, available beyond the research room walls in offices, schools, and homes throughout the country and around the world;
- Allowing users to take advantage of the information-processing efficiencies and capabilities afforded by electronic records;
- Increasing the return on the public's investment by demonstrating technological solutions to electronic records problems that will be applied throughout our digital society in a wide variety of institutional settings; and/or
- Developing tools for archivists to perform their functions more efficiently.

According to one aspect of the invention, there is provided a system for ingesting, storing, and/or disseminating information. The system may include an ingest module, a storage module, and a dissemination module that may be accessed by a user via one or more portals.

In an aspect of certain embodiments, there is provided a system and method for automatically identifying, preserving, and disseminating archived materials. The system/method may include extreme scale archive storage architecture with redundancy or at least survivability, suitable for the evolution from terabytes to exabytes, etc.

In another aspect of certain embodiments, there is provided an electronic records archives (ERA), comprising an ingest module to accept a file and/or a record, a storage module to associate the file or record with information and/or instructions for disposition, and an access or dissemination module to allow selected access to the file or record. The ingest module may include structure and/or a program to create a template to capture content, context, structure, and/or presentation of the record or file. The storage module may include structure or a program to preserve authenticity of the file or record over time, and/or to preserve the physical access to the record or file over time. The access module may include structure and/or a program to provide a user with ability to view/render the record or file over time, to control access to restricted records, to redact restricted or classified records, and/or to provide access to an increasing number of users anywhere at any time.

The ingest module may include structure or a program to auto-generate a description of the file or record. Each record may be transformed, e.g., using a framework that wraps and computerizes the record in a self-describing format with appropriate metadata to represent information in the template.

The ingest module, may include structure or a program to process a Submission Information Package (SIP), and/or an Archive Information Package (AIP). The access module may include structure or a program to process a Dissemination Information Packages (DIP).

Independent aspects of the invention may include the ingest module alone or one or more aspects thereof, the storage module alone or one or more aspects thereof; and/or the access module alone or one or more aspects thereof.

Still further aspects of the invention relate to a methods for carrying out one or more functions of the ERA or components thereof (ingest module, storage module, and/or access module).

The challenges faced by NARA are typical of broader archival problems and reveal drawbacks associated with known solutions. Thus, in an embodiment, an ERA may be provided to address some or all of the more general problems. In particular, archives systems exist for storing and preserving electronic assets, which are stored as digital data. Typically, these assets are preserved for a period of time (retention time) and then deleted. These systems maintain metadata about the assets in asset catalogs to facilitate asset management. Such metadata may include one or more of the following:
- Attributes to uniquely identify assets;
- Attributes to describe assets;
- Attributes to facilitate search through the archives;
- Attributes to define asset structure and relationships to other assets;
- Attributes to organize assets;
- Attributes for asset protection;
- Attributes to maintain information about asset authenticity; and/or
- Status of the asset lifecycle (e.g., planning receipt of asset through eventual deletion).

Unfortunately, these systems all suffer from several drawbacks. For example, there are limitations relating to the scale of the assets managed and, in particular, the size and number of all the assets maintained. These systems also have practical limitations in the duration in which they retain assets. Typically, archives systems are designed to retain data for years or sometimes decades, but not longer. As retention times of assets become very long or indefinite, longevity of the archives system itself, as well as the assets archived, is needed because an archives system's basic requirement is to preserve assets.

But indefinite longevity of an archives system and its assets pose challenges. For example, providing access to old electronic assets is complicated by obsolescence of the asset's format. Regular upgrades of the archives system itself, including migrations of asset data and/or metadata to new storage systems is complicated by extreme size of the assets managed, e.g., if the metadata has to be redesigned to handle new required attributes or to handle an order of magnitude greater number of assets than supported by the old design, then the old metadata generally will have to be migrated to the new design, which could entail a great deal of migration. Extreme scale and longevity make impractical archives systems that are not designed to accommodate unknown, future changes and reduce the impact of necessary change as much as possible.

Archives systems today are built on top of underlying storage systems based on commercial products that are typically comprised of file systems (e.g., Sun's ZFS file system) or relational databases (e.g., Oracle), and sometimes proprietary systems (e.g., EMC Centera). All of these storage systems have limitations in terms of scale (though sometimes the limits can be quite high). In some cases, there may be no products that can make use of the full scale of available file systems. Few of these systems can scale to trillions of entries (e.g., files). Limitations arise for different reasons but can be related to one or more of the following factors, alone or in combination:
- Limitations of object or file identification schemes (e.g., uniqueness of identifiers. www.doi.org provides background on the state of the art for electronic/digital entity identifiers.);
- Catalog limitations (e.g., number of entries, design bottlenecks);
- The number of storage subsystems that can be integrated (sometimes termed horizontal scalability);
- The capacity of underlying storage technologies;
- Search and retrieval performance considerations (e.g., search can become impractical with extreme size);
- The ability to distribute system components (e.g., systems can be difficult to distribute geographically); and/or
- Limitations of system maintenance tasks that are a function of system size (e.g., systems can become impractical to administer with extreme size).

Currently, relational databases (DBs) can scale only to 10 billion objects per instance. Relational DBs also generally do not perform as well as file systems for simple search and retrieval function tasks because they tend to introduce additional overhead to meet other requirements such as fine-grained transactional integrity. There is also no viable product that integrates multiple file systems in a way that provides both extreme scaling and longevity suitable for an archives file system.

There clearly exists a need for a system and/or method for managing records that allows for identifying and managing the records that is not dependent on the original hardware and/or software used to create the records, which may have little or no records management function.

According to one embodiment of the present invention, a method is provided for managing electronic records. Each electronic record comprises a data file, a plurality of data files, a portion of a data file, or portions of a plurality of data files. The electronic records comprise a plurality of record types and data file types. The method comprises forming a data file set comprising one or more logically related data files; identifying attributes of each record type in a record type template; identifying specifications of each data file type in a data file type template; and extracting digital components from the data file set, wherein the extracted digital components relate to the attributes in each record type template and the specifications in each data file type template and comprise an individual record.

According to another embodiment of the present invention, an electronic record archive for managing electronic record is provided. Each electronic record comprises a data file, a plurality of data files, a portion of a data file, or portions of a plurality of data files. The electronic records comprise a plurality of record types and data file types. The electronic record archive comprises a data file set comprising one or more logically related data files; a record type template for each record type, each record type template identifying attributes of each record type; a data file type template for each data file type, each data file type template identifying specifications of each data file type; and a digital component extractor configured to extract digital components from the data file set. The extracted digital components relate to the attributes in each record type template and the specifications in each data file type template and comprise an individual record.

It will be appreciated that the above-described embodiments, and the elements thereof, may be used alone or in various combinations to realize yet further embodiments.

Other aspects, features, and advantages of this invention will become apparent from the following detailed description when taken in conjunction with the accompanying drawings, which are a part of this disclosure and which illustrate, by way of example, principles of this invention.

### BRIEF DESCRIPTION OF THE DRAWINGS

Figure 1 is a reference model of an overall archives system;

Figure 2 is a chart demonstrating challenges and solutions related to certain illustrative aspects of the present invention;

Figure 3 illustrates the notional life cycle of records as they move through the ERA system, in accordance with an example embodiment;

Figure 4 illustrates the ERA System Functional Architecture from a notional perspective, delineating the system-level packages and external system entities, in accordance with an example embodiment;

Figure 5 illustrates a digital component extractor model according to the present invention;

Figure 6 illustrates an XML Schema as a template for content and structure of a record;

Figure 7 illustrates an instance of the template of Figure 6; and

Figure 8 illustrates an XSL template fore defining the presentation of the instance of Figure 7.

### DETAILED DESCRIPTION

The following description includes several examples and/or embodiments of computer-driven systems and/or methods for carrying out automated information storage, processing and/or access. In particular, the examples and embodiments are focused on systems and/or methods oriented specifically for use with the U.S. National Archives and Records Administration (NARA). However, it will be recognized that, while one or more portions of the present specification may be limited in application to NARA's specific requirements, most if not all of the described systems and/or methods have broader application. For example, the implementations described for storage, processing, and/or access to information (also sometimes referred to as ingest, storage, and dissemination) can also apply to any institution that requires and/or desires automated archiving and/or preservation of its information, e.g., documents, email, corporate IP/knowledge, etc. The term "institution" includes at least government agencies or entities, private companies, publicly traded corporations, universities and colleges, charitable or non-profit organizations, etc. Moreover, the term "electronic records archive" (ERA) is intended to encompass a storage, processing, and/or access archives for any institution, regardless of nature or size.

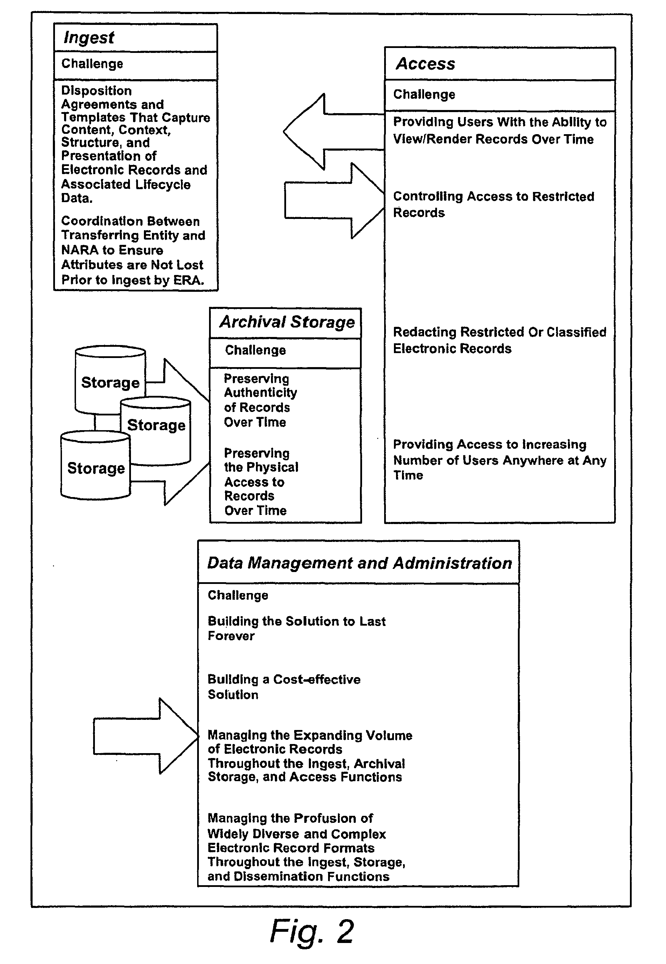

As one example, NARA's continuing fulfillment of its mission in the area of electronic records presents new challenges and opportunities, and the embodiments described herein that relate to the ERA and/or asset catalog may help NARA fulfill its broadly defined mission. The underlying risk associated with failing to meet these challenges or realizing these opportunities is the loss of evidence that is essential to sustaining a government's or an institution's needs. Figure 2 relates specific electronic records challenges to the components of the OAIS Reference Model (ingest, archival storage, access, and data management/administration), and summarizes selected relevant research areas.

*At Ingest -* the ERA needs to identify and capture all components of the record that are necessary for effective storage and dissemination (e.g., content, context, structure, and presentation). This can be especially challenging for records with dynamic content (e.g., websites or databases).

*Archival Storage* - Recognizing that in the electronic realm the logical record is independent of its media, the four illustrative attributes of the record (e.g., content, context, structure, and presentation) and their associated metadata, still must be preserved "for the life of the Republic."

*Access* - NARA will not fulfill its mission simply by storing electronic records of archival value. Through the ERA, these records will be used by researchers long after the associated application software, operating system, and hardware all have become obsolete. The ERA also may apply and enforce access restrictions to sensitive information while at the same time ensuring that the public interest is served by consistently removing access restrictions that are no longer required by statute or regulation.

*Data Management -* The amount of data that needs to be managed in the ERA can be monumental, especially in the context of government agencies like NARA. Presented herewith are embodiments that are truly scalable solutions that can address a range of needs - from a small focused Instance through large Instances. In such embodiments, the system can be scaled easily so that capacity in both storage and processing power is added when required, and not so soon that large excess capacities exist. This will allow for the system to be scaled to meet demand and provide for maximum flexibility in cost and performance to the institution (e.g., NARA).

Satisfactorily maintaining authenticity through technology-based transformation and re-representation of records is extremely challenging over time. While there has been significant research about migration of electronic records and the use of persistent formats, there has been no previous attempt to create an ERA solution on the scale required by some institutions such as NARA.

Migrations are potentially loss-full transformations, so techniques are needed to detect and measure any actual loss. The system may reduce the likelihood of such loss by applying statistical sampling, based on human judgment for example, backed up with appropriate software tools, and/or institutionalized in a semi-automatic monitoring process.

Table 1 summarizes the "lessons learned" by the Applicants from experience with migrating different types of records to a Persistent Object Format (POF).

**Table 1**

| **Type of record** | **Current Migration Possibilities** |
|---|---|
| E-mail | The Dutch Testbed project has shown that e-mail can be successfully migrated to a POF. An XML-based POF was designed by Tessella as part of this work. Because e-mail messages can contain attached files in any format, an e-mail record should be preserved as a series of linked objects: the core message, including header information and message text, and related objects representing attachments. These record relationships are stored in the Record Catalog. Thus, an appropriate preservation strategy can be chosen and applied to each file, according to its type. |
| Word processing documents | Simple documents can be migrated to a POF, although document appearance can be complex and may include record characteristics. Some documents can also include other embedded documents which, like e-mail attachments, can be in any format. Documents can also contain macros that affect "behavior" and are very difficult to deal with generically. Thus, complex documents currently require an enhanced preservation strategy. |
| | Adobe's Portable Document Format (PDF) often has been treated as a suitable POF for Word documents, as it preserves presentation information and content. The PDF specification is controlled by Adobe, but it is published, and PDF readers are widely available, both from Adobe and from third-parties. ISO are currently developing, with assistance from NARA, a standard version of PDF specifically designed for archival purposes (PDF/A). This format has the benefit that it forces some ambiguities in the original to be removed. However, both Adobe and Microsoft are evolving towards using native XML for their document formats. |
| Images | TIFF is a widely accepted open standard format for raster images and is a good candidate in the short to medium term for a POF. For vector images, the XML-based Scalable Vector Graphics format is an attractive option, particularly as it is a W3C open standard. |
| Databases | The contents of a database should be converted to a POF rather than being maintained in the vendor's proprietary format. |
| | Migration of the contents of relational database tables to an XML or flat file format is relatively straightforward. However, in some cases, it is also desirable to represent and/or preserve the structure of the database. In the Dutch Digital Preservation Testbed project, this was achieved using a separate XML document to define the data types of columns, constraints (e.g., whether the data values in a column must be unique), and foreign key relationships, which define the inter-relationships between tables. The Swiss Federal Archives took a similar approach with their SIARD tool, but used SQL statements to define the database structure. |
| | Major database software vendors have taken different approaches to implementing the SQL "standard" and add extra non-standard features of their own. This complicates the conversion to a POF. Another difficulty is the Binary Large Object (BLOB) datatype, which presents similar problems to those of e-mail attachments: any type of data can be stored in a BLOB and in many document-oriented databases, the majority of the important or relevant data may be in this form. In this case, separate preservation strategies may be applied according to the type of data held. |
| | A further challenge with database preservation is that of preserving not only the data, but the way that the users created and viewed the data. In some cases this may be depend on stored queries and stored procedures forming the database; in others it may depend on external applications interacting with the database. To preserve such "executable" aspects of the database "as a system" is an area of ongoing research. |
| Records with a high degree of "behavioral" properties (e.g., virtual reality models) | For this type of record, it is difficult to separate the content from the application in which it was designed to operate. This makes these records time-consuming to migrate to any format. Emulation is one approach, but this approach is yet to be fully tested in an archival environment. Migration to a POF is another approach, and more research is required into developing templates to support this. |
| Spreadsheets | The Dutch Testbed project examined the preservation of spreadsheets and concluded that an XML-based POF was the best solution, though did not design the POF in detail. The structured nature of spreadsheet data means that it can be mapped reliably and effectively to an XML format. This approach can account for cell contents, the majority of appearance related issues (cell formatting, etc), and formulae used to calculate the contents of some cells. |
| | The Testbed project did not address how to deal with macros: most spreadsheet software products include a scripting or programming language to allow very complex macros to be developed (e.g., Visual Basic for Applications as part of Microsoft Excel). This allows a spreadsheet file to contain a complex software application in addition to the data it holds. This is an area where further research is necessary, though it probably applies to only a small proportion of archival material. |
| Web sites | Most Web sites include documents in standardized formats (e.g., HTML). However, it should be noted that there are a number of types of HTML documents, and many Web pages will include incorrectly formed HTML that nonetheless will be correctly displayed by current browsers. The structural relationship between the different files in a web-site should be maintained. The fact that most web-sites include external as well as internal links should be managed in designing a POF for web-sites. The boundary of the domain to be archived should be defined and an approach decided on for how to deal with links to files outside of that domain. |
| | Many modem web sites are actually applications where the navigation and formatting are generated dynamically from executed pages (e.g., Active Server Pages or Java Server Pages). |
| | The actual content, including the user's preferences on what content is to be presented, is managed in a database. In this case, there are no simple web pages to archive, as different users may be presented with different material at different times. This situation overlaps with our discussion above of databases and the applications which interact with them. |
| Sound and video | For audio streams, the WAV and AVI formats are the de facto standards and therefore a likely basis for POFs. For video, there are a number of MPEG formats in general use, with varying degrees of compression. While it is desirable that only lossless compression techniques are used for archiving, if a lossy compression was used in the original format it cannot be recaptured in a POF. For video archives in particular, there is the potential for extremely large quantities of material. High quality uncompressed video streams can consume up to 100GB per hour of video, so storage space is an issue for this record type. |

It is currently not possible to migrate a number of file formats in a way that will be acceptable for archival purposes. One aspect is to encourage the evolution and enhancement of third-party migration software products by providing a framework into which such commercial off-the-shelf (COTS) software products could become part of the ERA if they meet appropriate tests.

When an appropriate POF cannot be identified to reduce the chances of obsolescence, the format may need to be migrated to a non-permanent but more modem, proprietary format (this is known as Enhanced Preservation). Even POFs are not static, since they still need executable software to interpret them, and future POFs may need to be created that have less feature loss than an older format. Thus, the ERA may allow migrated files to be migrated again into a new and more robust format in the future. Through the Dutch Testbed Project, the Applicants have found that it is normally better to return to the original file(s) whenever such a re-migration occurs. Thus, when updating a record, certain example embodiments may revert to an original version of the document and migrate it to a POF accordingly, whereas certain other example embodiments may not be able to migrate the original document (e.g., because it is unavailable, in an unsupported format, etc.) and thus may be able to instead or in addition migrate the already-migrated file. Thus, in certain example embodiments, a new version of a record may be derived from an original version of the record if it is available or, if it the original is not available, the new version may be derived from any other already existing derivative version (e.g., of the original). As such, an extensible POF for certain example embodiments may be provided.

In view of the above aspects of the OAIS Reference Model, the ERA may comprise an ingest module to accept a file and/or a record, a storage module to associate the file or record with information and/or instructions for disposition, and an access or dissemination module to allow selected access to the file or record. The ingest module may include structure and/or a program to create a template to capture content, context, structure, and/or presentation of the record or file. The storage module may include structure and/or a program to preserve authenticity of the file or record over time, and/or to preserve the physical access to the record or file over time. The access module may include structure or a program to provide a user with ability to view/render the record or file over time, to control access to restricted records, to redact restricted or classified records, and/or to provide access to an increasing number of users anywhere at any time.

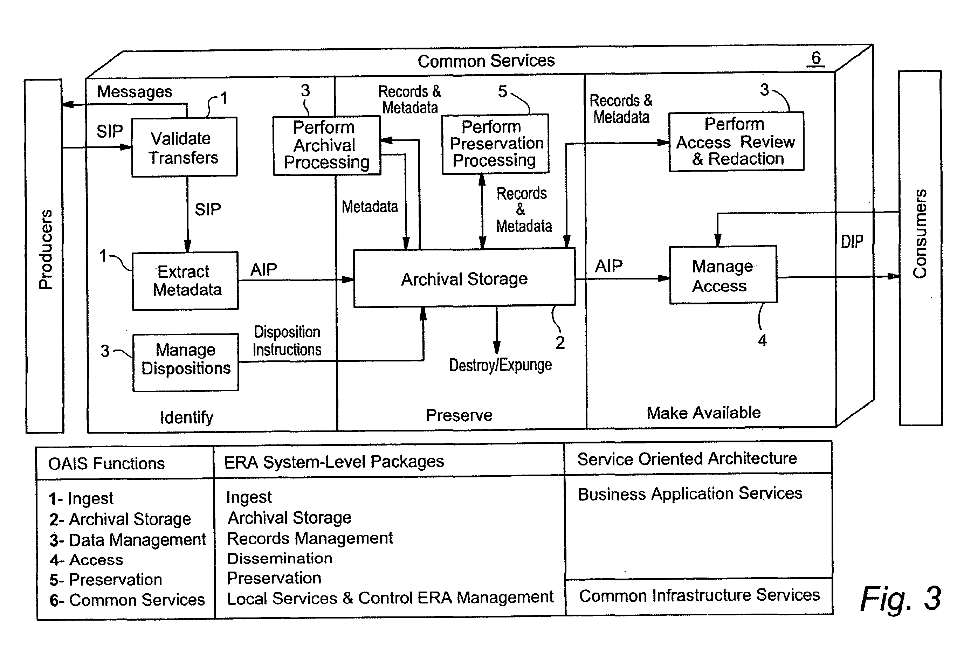

Figure 3 illustrates the notional life cycle of records as they move through the ERA system, in accordance with an example embodiment. Records flow from producers, who are persons or client systems that provide the information to be preserved, and end up with consumers, who are persons or client systems that interact with the ERA to find preserved information of interest and to access that information in detail. The Producer also may be a "Transferring Entity."

During the "Identify" stage, producers and archivists develop a Disposition Agreement to cover records. This Disposition Agreement contains disposition instructions, and also a related Preservation and Service Plan. Producers submit records to the ERA System in a SIP. The transfer occurs under a pre-defined Disposition Agreement and Transfer Agreement. The ERA System validates the transferred SIP by scanning for viruses, ensuring the security access restrictions are appropriate, and checking the records against templates. The ERA System informs the Producer of any potential problems, and extracts metadata (including descriptive data, described in greater detail below), creates an Archival Information Package (or AIP, also described in greater detail below), and places the AIP into Archival Storage. At any time after the AIP has been placed into Archival Storage, archivists may perform Archival Processing, which includes developing arrangement, description, finding aids, and other metadata. These tasks will be assigned to archivists based on relevant policies, business rules, and management discretion. Archival processing supplements the Preservation Description Information metadata in the archives.

At any time after the AIP has been placed into Archival Storage, archivists may perform Preservation Processing, which includes transforming the records to authentically preserve them. Policies, business rules, Preservation and Service Plans, and management discretion will drive these tasks. Preservation processing supplements the Preservation Description Information metadata in the archives, and produces new (transformed) record versions.

With respect to the "Make Available" phase, at any time after the AIP has been placed into Archival Storage, archivists may perform Access Review and Redaction, which includes performing mediated searches, verifying the classification of records, and coordinating redaction of records where necessary. These tasks will be driven by policies, business rules, and access requests. Access Review and Redaction supplement the Preservation Description Information metadata in the archives, and produces new (redacted) record versions. Also, at any time after the AIP has been placed into Archival Storage, Consumers may search the archives to find records of interest.

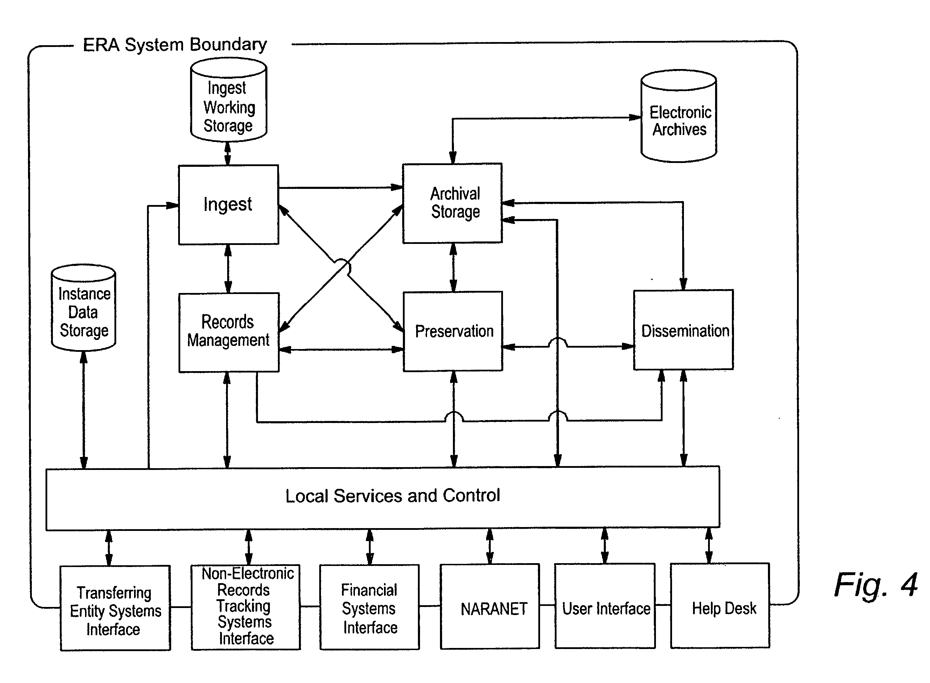

Figure 4 illustrates the ERA System Functional Architecture from a notional perspective, delineating the system-level packages and external system entities, in accordance with an example embodiment. The rectangular boxes within the ERA System boundary represent the six system-level packages. The ingest system-level package includes the means and mechanisms to receive the electronic records from the transferring entities and prepares those electronic records for storage within the ERA System, while the records management system-level package includes the services necessary to manage the archival properties and attributes of the electronic records and other assets within the ERA System as well as providing the ability to create and manage new versions of those assets. Records Management includes the management functionality for disposition agreements, disposition instructions, appraisal, transfer agreements, templates, authority sources, records life cycle data, descriptions, and arrangements. In addition, access review, redaction, selected archival management tasks for non-electronic records, such as the scheduling and appraisal functions are also included within the Records Management service.

The Preservation system-level package includes the services necessary to manage the preservation of the electronic records to ensure their continued existence, accessibility, and authenticity over time. The Preservation system-level service also provides the management functionality for preservation assessments, Preservation and Service Level plans, authenticity assessment and digital adaptation of electronic records. The Archival Storage system-level package includes the functionality to abstract the details of mass storage from the rest of the system. This abstraction allows this service to be appropriately scaled as well as allow new technology to be introduced independent of the other system-level services according to business requirements. The Dissemination system-level package includes the functionality to manage search and access requests for assets within the ERA System. Users have the capability to generate search criteria, execute searches, view search results, and select assets for output or presentation. The architecture provides a framework to enable the use of multiple search engines offering a rich choice of searching capabilities across assets and their contents.

The Local Services and Control (LS&C) system-level package includes the functional infrastructure for the ERA Instance including a user interface portal, user workflow, security services, external interfaces to the archiving entity and other entities' systems, as well as the interfaces between ERA Instances. All external interfaces are depicted as flowing through LS&C, although the present invention is not so limited.

The ERA System contains a centralized monitoring and management capability called ERA Management. The ERA Management hardware and/or software may be located at an ERA site. The Systems Operations Center (SOC) provides the system and security administrators with access to the ERA management Virtual Local Area Network. Each SOC manages one or more Federations of Instances based on the classification of the information contained in the Federation.

Also shown are the three primary data stores for each Instance:
1. **Ingest Working Storage -** Contains transfers that remain until they are verified and placed into the Electronic Archives;
2. **Electronic Archives -** Contains all assets (e.g., disposition agreements, records, templates, descriptions, authority sources, arrangements, etc.); and
3. **Instance Data Storage -** Contains a performance cache of all business assets, operational data and the ERA asset catalog.

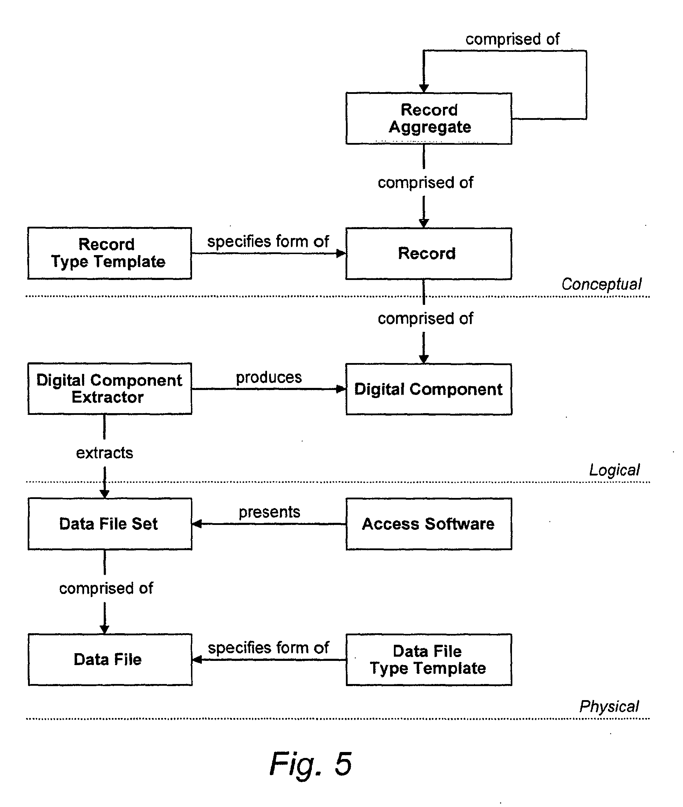

This diagram provides a representative illustration of how a federated ERA system can be put together, though it will be appreciated that the same is given by way of example and without limitation. Also, the diagram describes a collection of Instances at the same security classification level and compartment that can communicate electronically via a WAN with one another, although the present invention is not so limited. For example, Figure 5 is a federation of ERA instances, in accordance with an example embodiment. The federation approach is described in greater detail below, although it is important to note here that the ERA and/or the asset catalog may be structured to work with and/or enable a federated approach.

The ERA's components may be structured to receive, manage, and process a large amount of assets and collections of assets. Because of the large amount of assets and collections of assets, it would be advantageous to provide an approach that scales to accommodate the same. Beyond the storage of the assets themselves, a way of understanding, accessing, and managing the assets may be provided to add meaning and functionality to the broader ERA. To serve these and/or other ends, an asset catalog including related, enabling features may be provided.

In particular, to address the overall problems of scaling and longevity, the asset catalog and storage system federator may address the following underlying problems, alone or in various combinations:
- Capturing business objects that relate to assets that are particular to the application storing the assets (e.g., in an archiving system, such business objects may include, for example, disposition and destruction information, receipt information, legal transfer information, appraisals and archive description, etc.), with each new business use of the design potentially defining unique business objects that are needed to control its assets and execute its business processes;
- Maintaining arbitrary asset attributes to be flexible in accommodating unknown future attributes;
- Employing asset and other identifiers that are immutable so that they remain useful indefinitely and, therefore, enable them to be referenced both within the archives and by external entities with a reduced concern for changes over time;
- Supporting search and navigation through the extreme scale and diversity of assets archived;
- Handling obsolescence of assets that develops over time;
- Accommodating redacted and other derivative versions of assets appropriate for an archive system;
- Federating (e.g., integrate independent parts to create a larger whole) multiple, potentially heterogeneous, distributed, and independent archives systems (e.g., instances) to provide a larger scale archive system;
- Supporting a distributed implementation necessary for scaling, site independence, and disaster recovery considerations where the distribution of assets and associated catalogs may change over time but remain visible to all sites;
- Employing a search architecture and catalog format that allows exploitation of multiple, possibly commercial search engines for differing asset data types and across instances of archives in a federation, as future needs may dictate;
- Accommodating multiple, heterogeneous, commercial storage subsystems among and within the instances in a federation of archives to achieve extreme scaling and adapt to changes over time;
- Supporting a variety of data handling requirements based on, for example, security level, handling restrictions and ownership, in a manner that performs well and remains manageable for an extremely large number of assets and catalog entries;
- Supporting storage of any kind of electronic asset;
- Supporting transparent data location and migration and storage subsystem upgrades/changes; and/or
- Supporting reconstruction of the catalog and archives with little or no information other than the original catalog and archived bit streams (e.g., for the purposes of disaster recovery).

Electronic records are manifested, in some way, as electronic data files. There are several requirements for managing the relationship between electronic records and data files. These requirements include, but are not limited to: 1) ensuring that all data files stored in the system are associated with the records they constitute; 2) specifying the relationship of each ingested data file with an electronic record; 3) specifying the relationship of each transformed data file to an electronic record; and 4) verifying the data files associated with electronic records contained in a transfer.

The relationship between electronic records and data files appears simple at first glance, but is in reality somewhat complex, particularly when considering the relationship between an individual electronic record and data files, as is required by requirements 2) and 3) above. Although it is tempting to think of electronic records as being directly composed of data files, this is incorrect, as explained in more detail below.

The present solves this complexity through an intermediate layer called a digital component extractor, which establishes a bridge between electronic records and data files. This bridge allows archivists and transferring entities to model the true semantic relationship between individual electronic records and data files.

The concept of a record originates in the archival and records management domains, where a record represents a "unit of recorded information". As used herein, the term "record" means a unit of recorded information created, received, and maintained as evidence or information by an organization or person, in pursuance of legal obligations or the transaction of business.

This definition has a conceptual basis, in the sense that records are recognized and understood by humans to represent information. It is necessary when discussing electronic records to distinguish the archival and records management term "record" with the computer science concept of the same name. The computer science concept of "record" formally represents a matrix-tuple in linear algebra which is analogous to a row in a database table. The present invention uses the unqualified term "record" to indicate the archival and records management concept, and uses the qualifier "tuple record" to indicate the computer science concept. As used herein, the term "tuple record" means a matrix-tuple (defined by linear algebra), which is a finite function that maps field names to a certain value.

Archivists and records managers typically manage numerous records. The requirements discussed above require the system to manage not only records (in the plural), but also individual records (in the singular). The requirement to manage both individual and plural records presents several questions, including, but not limited to: 1) what defines the exact extent of an individual record? and 2) where precisely does an individual record start and where precisely does it end?

The answers to these questions must be precisely specified in the context of electronic records, where individual electronic records are managed independently.

Given the conceptual nature of records, a conceptual approach to defining the exact extent of a particular individual record is needed. A record can be said to exhibit a characteristic known as strong "semantic coherence," which is implied by the "unit of recorded information" phrase in the definition of a record. As used herein, the term "semantic coherence" is defined as a conceptual meaning that is closely related through connections and consistency, and holds together firmly as parts of the same mass.

Semantic coherence covers a scale, from weak (no coherence) to strong (high coherence), and the exact point on the scale for any particular set of information will involve subjective (archival) judgment. A record represents conceptual meaning that "sticks together" strongly enough on the semantic coherence scale to be considered an individual record.

Consider the following examples of semantic coherence:

**Example 1** Consider a record of a particular veteran's military service. Information about that individual's service dates, ranks, and defined benefits is strongly logically connected. Is the same information for a different individual the same record? No, because the logical connection for information about one particular individual is very strong whereas the logical connection for information across individuals is weaker.

**Example 2** Consider again a record of a veteran's military service. Now consider information about a battle plan for a particular military engagement in which the individual participated. Is the battle plan part of the individual's military service record? No, while the battle plan is in itself a record (and is loosely connected to the individual's service record), its meaning is inconsistent with the service record, and is therefore a separate record.

Put another way, strong semantic coherence is the characteristic that allows a distinction between one particular record and another particular record.

With paper records, archivists often do not identify individual records, due to time and resource constraints. Instead, archivists typically manage records in the aggregate. With electronic records, archivists may have the capability and desire to identify individual electronic records as standard practice.

Each individual record has an attribute that defines its particular "record type." As used herein, the term "record type" refers to the abstract form of the records, such as letter, memo, greeting card, or portrait, etc. As such, each record type represents a distinctive class of electronic records defined by their form. A record type represents a distinctive class of records defined by their function or use. Consider the following example of record types:

**Example 3** A parish church will typically maintain many different types of electronic records, including baptismal records, deeds to parish properties, ledgers of the parish financial accounts, minutes of parish meetings, and official parish correspondence. Each of these different record types has a distinct intellectual form. For example, baptismal records almost always list at least the name of the person baptized, the date and place of birth, and the date and place of the baptism. In contrast, financial account ledger records might include a chart of accounts with debit/credit entries. It would be rather surprising to find an infant's birth date in a financial ledger.

The abstract form of a record type is specified by a "record type template." As used herein a "record type template" is template that identifies specific attributes for a specific type of record. The record type template specifies the essential characteristics of the record, which are used to ensure authenticity.

Referring again to Example 3, the record type template for baptismal records would identify the information expected in that type of record, such as the name of the person baptized, date and place of birth, etc. Figure 5 illustrates the relationship between a record and a record type template. A record type template specifies the form of a record.

The Record Type Template also specifies the essential characteristics of the record, which are used to ensure authenticity as documented in co-pending, commonly assigned U.S. Application (Attorney Docket No 4870-25), entitled SYSTEM AND METHOD FOR

### PRESERVATION OF DIGITAL RECORDS.

Electronic records are accumulated and organized into "record aggregates" to facilitate organization and archival processing. As used herein, the term "record aggregate" means an intellectual aggregation of documentary material arising because they result from the same accumulation of filing process, the same function, or the same activity; have a particular form; or because of some other relationship arising out of their creation, receipt, or use; or because the aggregate was required for the purposes of archival arrangement. Record aggregates may be composed of other record aggregates, or records.

Record aggregates can themselves be accumulated and organized into higher order record aggregates. Consider the following example of a record aggregates:

**Example 4** An archivist might place military service records into an aggregate for the branch of the military (e.g., Army) which itself is within an aggregate for the Department of Defense, which itself is within an aggregate for the Federal Government.

Record aggregates may follow standard levels: record groups, collections, series, file units, and items. Each record aggregate has name and title attributes which help identify it. Record aggregates may be composed of other record aggregates, or electronic records. Figure 5 illustrates the relationship between electronic records and record aggregates.

Record aggregates may either be homogeneous, i.e., they contain electronic records of the same record type, or heterogeneous, i.e., they contain electronic records of different record types.

Like electronic records, record aggregates have a degree of semantic coherence - they are organized according to principles of original order and provenance, which ensures that related electronic records are aggregated together. However, the semantic coherence that binds together a record aggregate is somewhat weaker than the semantic coherence that binds together a particular individual record. Put another way, an individual record within an aggregate has an independent identity because its semantic coherence is "strong enough" to be considered a record.

Computer software applications operate on data files, and data files represent the atomic unit of recorded information for computers. Where electronic records are conceptual in nature, data files are clearly physical. As used herein, the term "data file" means: 1) a collection of data that is stored together and treated as a unit by a computer software application; and 2) related data (e.g., numeric, textual, and/or graphic information) and fields that are organized in a strictly prescribed form and format. This definition includes two characteristics of data files, which are described in more detail below.

The first characteristic is that data files typically require interpretation by a computer software application, which the OAIS model calls "access software." The OAIS definition for "access software" is a type of software that presents part of or all of the information content of an Information Object in forms understandable to humans or systems.

While it is conceivable that a person might look at all the individual bits of a data file to try to make sense of it, people generally use access software to present the information in some usable manner. The access software performs some kind of "presentation processing" to accomplish this. "Presentation processing" is defined as the software processing algorithms (including transformation, consolidation, tabulation, formatting, rendering, querying, filtering, interpretation, etc.) which access software employs to present the information contained in data files in a form understandable to humans.

Presentation processing covers a scale, from low (little to no processing required) to high (complex processing required), and the exact point on the scale for any particular set of information will involve subjective judgment. Presentation processing often involves presenting data files visually, but could also include presenting data files audibly or through any other human sensory perception.

Some data files are "eye readable" with minimal presentation processing. "Eye readable" is defined as data files whose information is inherently understandable to humans through visual inspection using access software that supports minimal presentation processing.

Only the simplest of data files are eye readable and most data files are completely unintelligible without a high degree of presentation processing. Using access software specifically suited to presenting a certain class of data files is necessary when the access software performs a high degree of software processing because without this access software, the information in the data files would be incomprehensible. Consider the following examples:

**Example 5** A fixed-length tabular dataset might be composed of one data file that structures tabular data into a regular row/column format that can easily be read and understood by a person. In this case, using access software might be optional.

**Example 6** A single web page might be composed of dozens of individual data files. For example, the web page might include multiple Hyper-Text Markup Language (HTML) data files, multiple Cascading Style Sheet (CSS) data files, client-side JavaScript script files, and multiple image files in various formats, such as Graphics Interchange Format (GIF) and Portable Network Graphics (PNG).

While a person could look through the individual bytes in each of these individual files, doing so would not provide an accurate sense of the data files' information content. This is because the access software, a web browser, actually performs a great deal of software processing to apply style sheets to transform and render content, more software processing to render images, and more software processing to render the behavior contained in the client-side scripts. This kind of software processing cannot easily be imagined or replicated by a person, so using access software is required.

**Example 7** Many data file formats are either undocumented, or are essentially incomprehensible to a person. For example, Microsoft Word's native binary (DOC) data file format is incompletely documented (due to the fact that it is proprietary) and is incomprehensible to a person who might look at the individual bytes within the data file. Using access software for these kinds of data files is required.

Historically, data files created in the earlier days of computing require low presentation processing, but as computers, software, data, and algorithms have continually increased in complexity over time, the amount of required presentation processing has also increased.

The second characteristic is that data files have a prescribed form and format. The above examples reference several data file formats, including Hyper-Text Markup Language (HTML) and Microsoft Word's native binary (DOC). This prescribed form and format is specified by a "data file type template." As used herein, the term "data file type template" means a set of specifications about a data type that governs its format and behaviors.

The "specifications" in the above definition are essentially the instructions required by the access software to perform presentation processing.

Data files are often aggregated to facilitate management and presentation processing. In the web page example (Example 6), the web page is composed of many individual data files, which is known as a "data file set." The term "data file set" means one or more data files that are logically related for purposes of presentation processing by access software.

Data file sets can either be "explicit," or "implicit." "Explicit" data file sets are defined by information contained in the data files, whereas "implicit" data file sets are defined through inscrutable software processing algorithms. Consider these examples:

**Example 8** Consider again the example of a web page. When an HTML data file refers to a CSS style sheet data file, it does so explicitly by data file name. This name can be resolved to find the CSS data file.

**Example 9** Consider an example of a set of database tables that include multiple data files for different kinds of information. One data file might contain simple data, another might contain binary data, and yet another data file might contain index information. The relationship between these data files is implicit, meaning it is not specified within the data files. Only the database application software defines these relationships as part of its presentation processing.

Figure 5 illustrates the relationship between data files, data file type templates, data file sets, and access software.

As discussed above, electronic records are conceptual and data files are physical. Electronic records are manifested in some way as electronic data files, but the manner in which the electronic records are manifested must first be determined.

First, the options to describe the relationship between electronic records and data files should be considered. An individual record may be composed of:
- One entire data file
- Multiple entire data files
- A portion of one data file
- Portions of multiple data files

All of these options may apply, as explained in the following examples, which extend the example of the parish church (Example 3).

**Example 10** The parish church maintains each baptismal record as a separate word processing document data file, and its financial ledger as a separate spreadsheet data file. In this case, there is a one-to-one correspondence between a record and each data file.

**Example 11** The parish church maintains two separate spreadsheet data files for its financial ledger record, one spreadsheet for the balance statement and a second spreadsheet for the profit/loss statement. In this case, one record is composed of multiple data files.

**Example 12** The parish church has a sophisticated content management software application to manage all of its documents. The content management application stores all documents (including baptismal records, correspondence, financial ledgers, etc.) in one single database data file. In this case, one record is composed of a portion of one data file.

**Example 13** Again, the parish church has a sophisticated content management software application to manage all of its documents. The content management application stores all documents in one single database data file and all metadata about the documents in a separate database data file. In this case, one record is composed of portions of multiple data files.

In Examples 10-13, the intellectual form, content, and number of electronic records remains fixed, while the relationship of those electronic records to data files varies, depending on the particulars of how the parish church manages and uses its data files at a specific point in time.

The reason that the relationship varies between a record and data files is that a record has strong semantic coherence, while data files may not have strong semantic coherence. A particular data file might contain many different kinds of information, or even bits and pieces of information, which sometimes cannot be eye readable without significant presentation processing and access software. In other words, semantic coherence is not a requirement for data files per se - the semantic coherence is realized by the presentation processing and access software and the human understanding gained through using that software.

The relationship between electronic records and data files, then, is potentially many-to-many at a portion level - a record might be composed of one or more portions of data files, and data files might contain one or more portions of electronic records.

Based on Examples 10-13, it should be appreciated that the gap between electronic records (conceptual view) and data files (physical view) must be bridged. As the InterPARES I Preservation Task Force concluded, "Digital data inscribed on a physical medium do not have the form of a record. It is necessary to transform the inscribed bits into the form of the record." ("Preserving Electronic Records," Presentation on the work of the InterPARES I Preservation Task Force, June 19, 2002)

The present invention provides a solution to the gap between electronic records an data filed by adding a logical view which transforms between the conceptual and physical views. To perform this task, the present invention provides a "digital component extractor." As used herein, the term "digital component extractor" is defined as a software component that extracts digital components from a data file set, guided by a set of instructions. A "digital component" is defined herein as a set of digital information that exhibits strong semantic coherence and is expressed as a bit stream.

The purpose of the digital component extractor is to extract digital components from data files in a data file set that together comprise a record. Figure 5 illustrates the model, which bridges the gap between electronic records and data files.

One implication of this model is that electronic records are composed of digital components (which exhibit strong semantic coherence) and not data files (which can exhibit any range of semantic coherence, including none whatsoever). Another implication is that digital component extractors are instructed as to how to extract digital components from data file sets.

Digital component extractors establish the map between data files and electronic records, and because this map is many-to-many, the exact method by which digital component extractors extract digital components varies. Consider the following examples:

**Example 14** If there is a one-to-one correspondence between a record and a data file, the digital component extractor simply needs to return the specified data file as the digital component. For example, a digital component extractor for a record that corresponds to a single word processing document data file would simply return that data file as the digital component.

**Example 15** If a record is composed of portions from one data file, the digital component extractor includes an algorithm to extract portions of the specified data file. For example, a digital component extractor for a record that corresponds to an e-mail archive data file would extract individual e-mails as digital components.

**Example 16** If a record is composed of portions from more than one data file, the digital component extractor includes an algorithm to extract portions of the specified data files. For example, a digital component extractor for a record that corresponds to a document spread across multiple database tables (and data files) in a content management software application would perform appropriate queries on those database tables to extract the digital component.

Put another way, digital component extractors contain the instructions necessary to extract digital components from data file sets.

Table 2 documents the approaches for specifying digital component extractors, and their advantages and disadvantages.

**Table 2**

| ***Approach*** | ***Advantages*** | ***Disadvantages*** |
|---|---|---|
| *The transferring entity defines the digital component extractors early in the records lifecycle, as the records are still in active use* | *The transferring entity defines semantic coherence early, which ensures that the information contained in the data files is accessible* | *Requires up-front planning and investment by the transferring entity, plus a change in how the transferring entity manages information* |
| *The transferring entity (with assistance from the archivist) defines the digital component extractors after-the-fact, as part of preparing to transfer the electronic records to ERA* | *The transferring entity (with assistance from the archivist) generally has the subject area domain knowledge and technical knowledge to properly define semantic coherence* | *Requires a large time and resource investment at the exact point (records management offices) at which transferring entities are overburdened* |
| *The ERA system itself imputes digital component extractors from record type templates and data type templates* | *The system can make reasonable assumptions about the digital component extractors in an automated manner* | *A human might make better assumptions than the automated ones, based on subjective judgment. Also, the system might not always be able to perform this imputation (for example, if key information is missing)* |
| *An archivist defines the digital component extractors after-the-fact, during archival processing* | *The archivist generally has the subject area domain knowledge and technical knowledge to properly define semantic coherence* | *Requires a large time and resource investment from the archivist, which may not scale to meet the electronic record archive's expected ingest volumes* |
| *The electronic record archive system itself imputes semantic coherence and therefore digital component extractors from the data file content* | *The system can apply linguistic and pattern matching algorithms to determine appropriate digital component extractors in an automated manner* | *This is an area of on-going computer science research, and at this time this requires further development.* |

It would be efficient for transferring entities to establish intellectual control over the semantic coherence of their electronic records as they develop their information systems, but this will not always happen. It would also be efficient if transferring entities, with assistance from the archivist, at least defined their electronic records before the point of transfer, but again this will not always happen, because this is a burden on records officers. The system of the present invention imputes digital component extractors from templates as discussed below, and this generally will be acceptable. In the cases where none of these approaches work, the ERA must allow archivists to establish intellectual control over the electronic records at an item level through defining the digital component extractors.

Generally, ERA imputing the digital component extractors from the relevant templates will work quite well. Consider this example:

**Example 17** The record type template indicates a particular set of records is correspondence, and the data file template indicates the data file is in Microsoft Outlook (PST) format. A reasonable set of digital component extractors can be imputed that extract individual e-mails into separate digital components. Each digital component represents an individual e-mail, which exhibits strong semantic coherence.

In some rare cases, there may be no workable digital component extractors, because they are not defined by either the transferring entity or archivist, and the ERA system cannot impute reasonable alternatives. Consider this example:

**Example 18** The record type template indicates a particular set of records is geospatial information, and the data file template is in an unknown proprietary format that is not human readable and not documented. ERA cannot impute a reasonable set of digital component extractors because it is not aware of the data type format.

In the case where there are no workable digital component extractors, the ERA of the present invention will create a default set of digital component extractors, known as "placeholder digital component extractors," which are defined as a set of digital component extractors that assume each data file is a single digital component

The levels of available preservation, access, and authenticity services that the ERA of the present can provide may be constrained for electronic records with placeholder digital component extractors, so these should be the exception rather than the norm. In other words, placeholder digital component extractors are only consistent with the most basic level of service in ERA.

All of the entities modeled by the present invention, such as electronic records, record aggregates, digital components, data files, etc., must be identifiable and resolvable. An approach to identifiers is more fully documented in co-pending, commonly assigned U.S. Application (Attorney Docket 4870-9), filed April 26, 2007, entitled SYSTEM AND METHOD FOR AN IMMUTABLE IDENTIFICATION SCHEME IN A LARGE SCALE COMPUTER SYSTEM.

All identifiers within THE ERA must exhibit the following characteristics:
- The identifier must resolve to the entity which it identifies
- The identifier must be guaranteed unique across the ERA identifier namespace
- The identifier for a particular entity must be immutable
- The identifier system must scale to ten teraobjects

An approach to generating identifiers according to the present invention involves using a cryptographic hash algorithm (such as SHA-256) based on the initial content of the thing being identified. This approach meets the required constraints.

It should be noted that some entities have an identity which is independent of its content. For example, the identity of a record is independent of the content digital components and/or data files that make up any particular version of that record. New versions of electronic records can arise from redaction and preservation activities, and each record version will have its own independent identifier that is related back to the record.

In these cases, the identifier will be generated from the content of the entity when it is first created within ERA and immutable thereafter. Thus, the identifier for electronic records would be generated and assigned when the record is created within ERA based on the content of the first version's digital components, and that identifier would be immutable thereafter.

An approach to preservation and authenticity issues are more fully documented in co-pending, commonly assigned U.S. Application (Attorney Docket 4870-25), entitled SYSTEM AND METHOD FOR PRESERVATION OF DIGITAL RECORDS.

The notion of digital components and digital component extractors has some interesting implications for preservation. The InterPARES I Preservation Task Force states "It is impossible to preserve an electronic record. It is only possible to preserve the ability to reproduce an electronic record." ("Preserving Electronic Records", Presentation on the work of the InterPARES I Preservation Task Force, June 19, 2002.) A record's digital components, along with access software, allow reproduction of the electronic record. As such, the preservation strategy of the present invention ensures the digital component extractors produce digital components that authentically represent the record. This means that digital component extractors must honor the essential characteristics associated with the record (and which are specified in the record type template).

The process of redaction involves deleting specific content from a record to produce a new version of the record, and the new version of the record typically has reduced access restrictions.

In the electronic record context, digital content is contained in both data files and digital components, so in theory redaction (deleting digital content) could occur in either place. In practice, most redaction tools redact content from data files, so the present invention will support this approach. This means that redaction will occur against data files, which will produce a new version of the data files, and the digital component extractors will produce new digital components from these redacted data files. This process will result in a new version of the record, that is composed of redacted digital components that have been extracted from redacted data files.

Like records, original order and arrangement are conceptual and not physical. Thus, order and arrangement both apply to records, but not data files. The order of data files is essentially arbitrary and meaningless from an archival context, since data files exhibit low semantic cohesion.

It is possible that electronic records might have no meaningful original order, in the same way paper records might have no meaningful original order. In these cases, the present invention will follow the advice of Frank Boles in "Disrespecting Original Order" to maintain records in a state of simple usability. (Boles, F., "Disrespecting Original Order", The American Archivist, Vol. 45 No.1, pp.26-32, 1982.) Simple usability for electronic records implies dynamic sorting, filtering, and querying capabilities.

It is possible that the digital component extractors of the present invention will be executed to produce a physical representation of a digital component. In this case, a digital component would be a bit stream serialized as a managed file within the system. It is also possible that the digital component extractors will be executed on-demand to produce a transient digital component, as needed. In this case, a digital component would be a transient in-memory bit stream. The present invention allow for both options, and the decisions on which to use will be a matter of policy and design.

Templates play a large part in NARA's vision of the ERA both as a means to manage electronic records, in respect to scheduling, and as a means to preserve records, in respect to defining preservation formats and processing.

Because there are many potential applications of templates, and because templates are sometimes described by examples of documents that conform to the templates rather than the template itself, there is a need to define what templates are and how they are used.

As discussed in more detail below, the present invention utilizes a taxonomy of templates and the relationships between templates and instances of templates to identify and manage records. The present invention also utilizes the relationship between hierarchical templates and hierarchical information using a matrix. Furthermore, the present invention provides for managing templates.

It is helpful to begin with an example of templates and instances of templates, and to provide an illustrative listing of some kinds of templates that might be used within the ERA system of the present invention.

According to the present invention, the use of template may be associated with all of the following:
- To describe the structure and content of record life cycle documents that the system will help create and manage. This includes templates for Transfer Agreements, Disposition Agreements, Preservation Plans, etc.
- To describe the presentation of documents.
- To define the relationship between assets within the archive (such as the original order of records) and within transfers of records to the archive.
- To describe the structure and content of archival metadata, the contextual information which, together with the digital objects it describes forms the records. This includes archival description elements and life cycle data elements.
- To describe components and resources within the system itself. Instances of these templates include data type format templates, templates that describe digital adaptation processes, and resources such as Authorities Sources.
- To describe the operation of ERA system itself. Instances of these templates define operations such as work flow processes that orchestrate the use of ERA system services.

It can therefore be seen that templates are being used according to the present invention to:
- Describe the content and structure of a document - what data elements it should contain and any relationships between those data elements
- Describe the content and structure of the metadata that describes a document.
- Describe how a document should be presented to a user, how would its content be laid out on a screen or a printed page, and when appropriate to describe the choreography of the presentation of different digital objects
- Serve as a manifest to list all the documents contained within some collection of documents.
- Serve as a catalog of documents describing the relationships between them.
- Serve as components within the ERA system, providing processing instructions for operations that take place, such as the orchestration of work flows or digital adaptation processing.
- Describe components of the ERA system, such as specific data type formats.

Some of these uses of templates have been described with reference to instantiations of the templates and some have been described with reference to the templates themselves. It is necessary to distinguish between templates and instances of templates.

Using XML technologies as an example, an example of templates, and instances of documents that conform to or are generated by those templates that might be used in the preservation and presentation of a document displayed on a web page is provided.

The first template is an XML schema that defines the structure of the record catalog which lists the digital objects that are part of the web page and their hierarchical relationships. An instance of that template is a selection from the record catalog for the page in question.

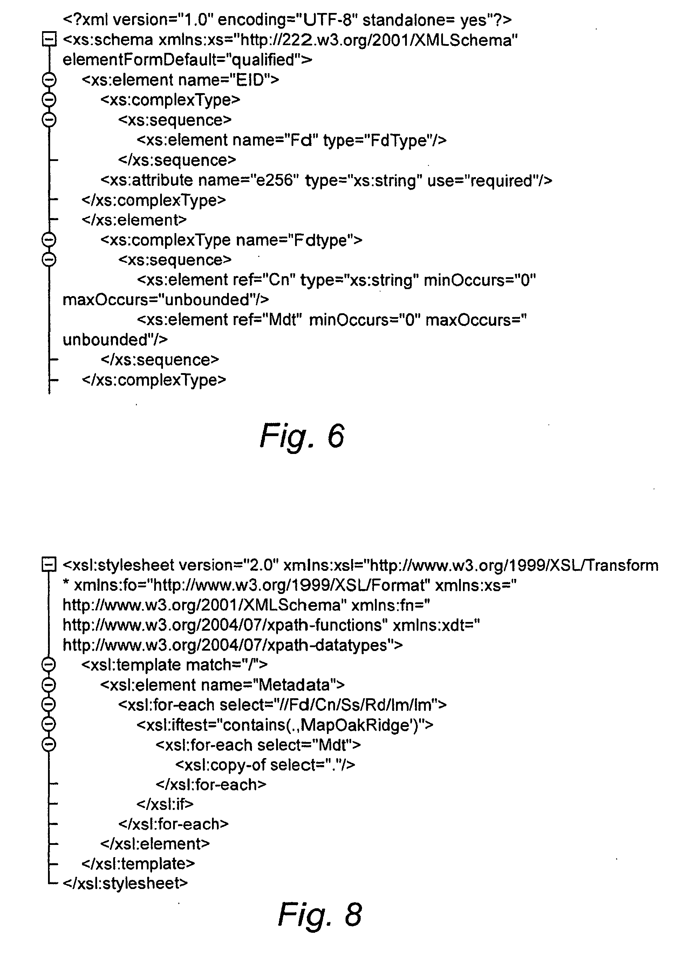

Referring to Figure 6, the next template might be an XML schema that defines the content and structure of the document that is to be displayed on the page. Each data element in the document is defined. The relationship(s) of each data element to other data elements are also defined.

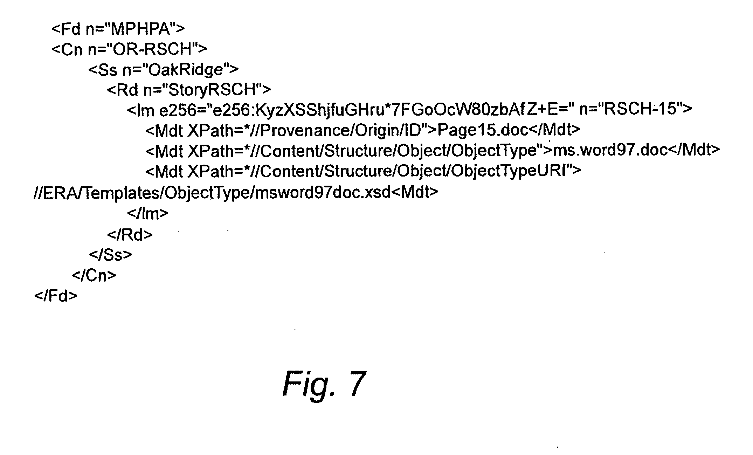

Referring to Figure 7, an instance of the template of Figure 6 is an XML document (the textual content of the document) that conforms to that schema and which includes the data elements and content of the type defined in the schema. The instance has data elements described in the schema that hold values, which is also consistent with the schema.

Referring to Figure 8, the next template might be an XSL template that defines the presentation of that XML instance in HTML on the web page (or as in some other format such as PDF). The XSL template may be a spreadsheet, or other type of template, and can be used to describe how an XML instance that conforms to an XML shema will be presented or displayed, for example as HTML or a PDF file. The template can also be used to transform an XML document into a variety of other formats, as well as into a different XML document.

Other types of templates, may orchestrate a sequence of pages. The instantiation of that template is the web page - which is the record that is being preserved.

Additional templates may be involved in defining the behavior of a web application, including templates that define the work flow within the application, templates that define the orchestration of pages within the application and templates that describe the animation of items on a page.

Table 3 provides an overview of some of the types of templates that may occur in the ERA of the present invention. Although each example has been mapped to an appropriate XML syntax that might be used to create the template, it should be appreciated that the present invention is not limited to the use of any particular format. It should also be appreciated that the list of templates Table 3 is not intended to be exhaustive. There are many possible applications for templates and there are other XML technologies, and non-XML technologies, which may be used.

**Table 3**

| **Application of Template** | **Indicative XML Syntax** | **Examples** |
|---|---|---|
| **1.Record Structure Templates** | | |
| Structure of Records; Record Catalog entries | XML Schema, METS | • Record Catalog |
| | | • Submission Information Package |

| **2. Lifecycle Documents** | | |
|---|---|---|
| Structure and content of Life Cycle documents | XML Schema | • Transfer Agreement |
| | | • Disposition Agreement |
| | | • Preservation Plan |
| Layout of documents on screen or paper | XSL, XSL-FO | • Presentation of documents |

| **3. Archival Metadata** (information specific to a record or a part of a record) | | |
|---|---|---|
| Structure and content of Archival Description | XML Schema | • Origin, Provenance, Content, Context, etc. |
| Structure and content of Life cycle Data | XML Schema | • Additions to life cycle data |

| **4. System Components** (an information component of the system, or description of a component of the system) | | |
|---|---|---|
| Structure of Authority Sources and Thesauri | XML Schema | • Authority Sources |

| **Application of Template** | **Indicative XML Syntax** | **Examples** |
|---|---|---|
| Structure and content of Persistent Object Formats (POF) *(1) | XML Schema | • Persistent Formats where content is primarily words, numbers, vectors etc. |
| | BSDL | Persistent Formats where content is primarily images, sound, etc. |
| Digital Adaptation Instructions non-exhaustive list *(2) | XSL/T | • Data type specific processing templates to transform from one data type to another |
| Presentation of multimedia records | SMIL | • Templates to define interactions between multiple digital items in multimedia presentations |

| **5. System Metadata** | | |
|---|---|---|
| Description and versioning of templates | XML Schema | • Disposition Agreement template |

| **6. Identity & Rights** | | |
|---|---|---|
| Structure and content of User Profiles | XML Schema | • User profiles |
| Authorization Requests / Responses | SAML | • Authorization of users |
| Access Restrictions & Rights | XACML | • Definition of access privileges for specific records |

| **7. Service Architecture** | | |
|---|---|---|
| Work flow Processes | BPEL | • Orchestration of services involved in business processes, such as managing a FOIA request |
| Services | WSDL | • Inputs and outputs of individual services |

Templates may be used to define the relationships between records in the archives, such as defining the original order of records, the structure of the record catalog, and the structure of transfers to the archives or the delivery of copies to users (Submission Information Packages and Dissemination Information Packages).

Capturing the original order of a record represents a case where a template can be used within a template. The structure of the Record Catalog can be described in a template that defines the information elements that make up an entry in the catalog. The content of some of those information elements may be other templates, or they may be become values in the instantiation of an object that conforms to another template.

Templates may be used to define the content and structure of records schedules and other Life Cycle Documents.

Templates may be used to define the structure of record description, and the elements of information that compose the metadata of records.

A template for Archival Metadata, which includes description and Life cycle data, will define which elements of information that must be present, what type of information they should contain, and how they are related to each other.

Templates may be used as inputs to processes that transform digital objects in the archive, including templates that may be used to define the presentation of assets to users.

The System component templates cover the widest variety of use of templates. This includes defining persistent object formats, defining the information needed by a processor to render those formats in a current format, defining the choreography and behaviors of objects in aggregate multimedia records, etc.

The System Components will be constantly evolving, adding new templates as new digital technologies evolve. Each type of system component will have its own family of templates.

Templates may be used to define the structure of component description. The ERA system will archive itself and be self-describing. Templates will define elements of information needed for components to be self describing.

Templates may also be used to define the nature and rights of entities and the access restrictions on assets in the archive.

A records-centric access model will define restrictions and rights in relation to records using the internal structure of the records themselves. Templates will define the instructions on records and create the framework for aligning identity - role - authorization to protect the records.

Templates may further be used to describe system services and orchestrate services within work flow processes.

The Service Architecture describes the arrangement and delivery of services in the ERA system of the present invention, including the work flow processes and the functionality at each step in the process. Templates, expressed for example in Business Process Execution Language (BPEL), may be used to describe the orchestration of functional services, and at a lower level, describe the inputs and outputs to each individual functional services, using for example Web Services Description Language (WSDL).

A hierarchical scheme according to the present invention may be implemented for managing templates. The introduction of hierarchy to the management of templates adds another level of abstraction. A template abstracts from a specific instance to the general case. Such a template is associated to a single type of object. With hierarchy, another layer of abstraction may be added that can be applied to any of: 1) the template, 2) the content which it controls, or 3) both.

As an object subject to a hierarchical arrangement the template becomes a mirror of the organization of objects into increasing larger aggregate structures which is a method of organization common to the ERA system of the present invention as a whole.

Templates can have a hierarchical connotation either because: (a) the template itself can only be instantiated with reference to a hierarchy of templates which collectively define its content, or (b) the object the template describes can only be instantiated with reference to a hierarchy of digital items or conceptual arrangements of digital items.

In the first case (a), instantiating the template requires retrieving elements from within different templates within a hierarchy. For example, Life Cycle Data document templates (Transfer Agreements, Disposition Agreements, etc) will have their own specific information elements but will also likely share a set of information elements common to all Life Cycle Data documents.

The template hierarchy might look like:

ERA.xsd (elements common to the ERA, such as identifiers)

Life_Cycle_Documents.xsd (elements common to all Life Cycle documents)

Transfer_Agreement.xsd (e.g. SF-258 specific elements)

Disposition_Agreement.xsd (e.g. SF-115 specific elements)

Preservation_Plan.xsd (elements specific to this template).

In XML Schema, this may be implemented by having each template in each child level of the template hierarchy begin with an <include/> instruction that incorporates in the child template all the data elements described in its parent, which in turn will <include/> all the data elements in its parent, etc.

In the second case (b), to instantiate a document that conforms to a template requires retrieving elements of information from hierarchically organized assets within the archive.

For example the template for archival metadata may include elements of information some of which are associated to a record catalog item that represents the conceptual concept of the entire record (the parent or root element of the record) while other elements of information are associated to individual digital items that are components of the record.

To create a document that represents the archival metadata for a specific digital item, and which conforms to the archival metadata template, requires retrieving all the information elements from each level in the record's internal hierarchy from that digital item up to the record's "root".

For example, suppose that the family of a noted physicist donates her personal papers to NARA. The record hierarchy that might look like:

Curie Collection
Family Papers
Professional Papers
Research Activities
Reagents

Metadata that describes the <Origin> of the record will likely be associated with the highest level in the record hierarchy, the "//Curie Collection" level, as the description of <Origin> applies to all the documents in that collection.

Metadata that describes the <Digital Object Type> of a specific document will be associated with a specific document, such as "//Curie Collection/Professional Papers/Research Activities/Reagents".

To create an instance of the metadata for the "//Reagents" document requires the accretion of the metadata for itself and all its ancestors as we traverse the record hierarchy up to the collection level.

The possible intersections of templates and hierarchies can be presented in a matrix as shown in Table 4. Along one axis are the templates; either derived from a hierarchy or self-contained. Along the other axis are the conforming content, again either derived from a hierarchy or self-contained.

The matrix below illustrates where some types of templates may fall in the matrix.

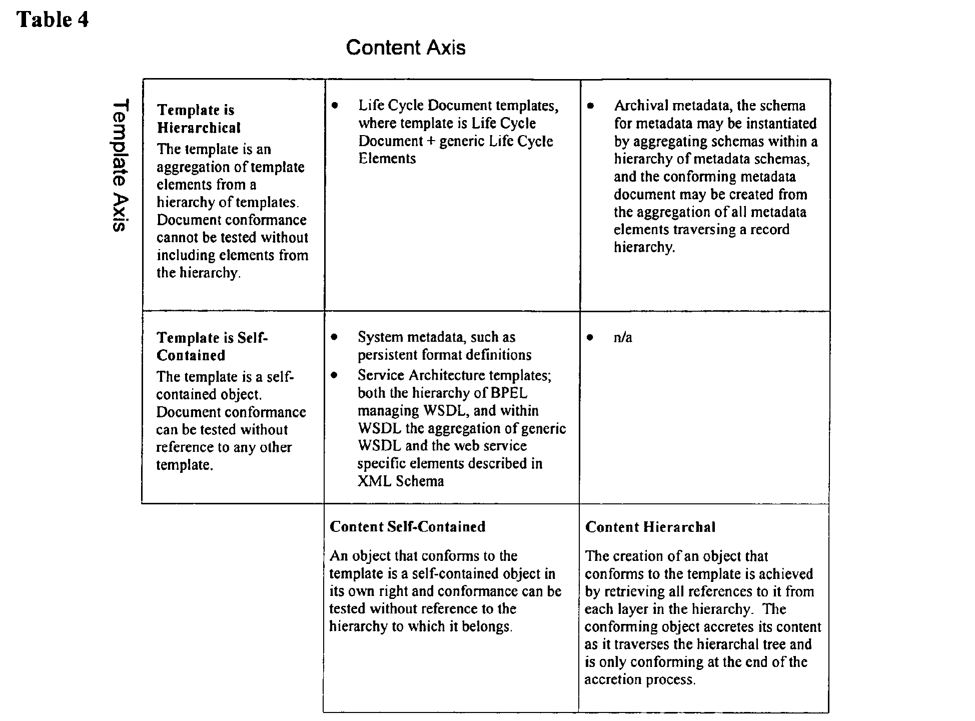

In a self-describing system, each template is both a functional component of the system and a record in the system. As a record in the system, the template is treated the same as any other record, with its own metadata, life cycle management, and preservation. The ERA system of the present invention may be regarded, therefore, as an aggregate record, with its own hierarchy of documents, so that part of our ERA record hierarchy might look like

ERA

System

Templates

System

Workflow

DispositionWorkflow.bpel (instance of BPEL template)

AddDescriptionService.wdsl (instance of WSDL template)

Each instance of a system component, including templates, has its own archival metadata (metadata that describes a record). This latter metadata makes the component self describing.

For example, a WSDL file is an instance of the template for defining a service and a BPEL file is an instance of the template that defines a work flow.

The archival metadata of the WSDL file will include information such as;
- What does it do?
- What work flow does it belong to?
- What version is this, is it the current version?
- How does it work - inputs, outputs?
- Where did the code originate?
- Are there are intellectual rights associated to this web service?
- What is the actual code?

This sort of information could be included in the WSDL file as comments (or <Documentation/> elements) but would not be very manageable as a result. The system would not be able to apply its record management functionality to its own templates, which is based on archival metadata held exterior to the digital object the metadata describes,

To make description of the system components manageable, they should be described using the same archival metadata templates as for any record.

While there will be a defined template for a service in the ERA (such as the XML Schema for WSDL), the present invention may use another template, the Archival Metadata schema, as the template to describe the service as a component of the system.

As templates evolve, the life cycle data elements in their description capture that evolution, such as the version. When a change to a template changes the behavior of the system, the earlier version of the template is preserved as a record so that the previous behavior of the system can be understood.

Templates will evolve as ERA evolves. As such templates, as records in ERA, will be versioned and managed. Life cycle data elements or records will include the version of the templates they use. Versioning will allow new templates to be introduced without creating problems with validation. Whether life cycle content that is subject to validation against templates should be updated as templates evolve will be a policy decision applied to each template.

Each process to update a template may be a standard work flow in the ERA, and described in its own template, which will include appropriate approval and authorization steps as determined in policy.

Templates, as records, will have their own fixity information to ensure their integrity and the life cycle data of objects modified by templates will record which version of which template was used.

The concept of managing templates can be extended to apply to every component of the system. Each software component of the ERA system should be described and held in the ERA. This applies to platform applications, web application components, any client side components, as well as all the functionality wrapped in web services which can be managed within the concept of managing templates as described above.

The concept of preserving original arrangement to the system can also be extended so as to describe in Archival Metadata how all the components are structurally linked - creating in essence a schema for the ERA itself.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the invention. Also, the various embodiments described above may be implemented in conjunction with other embodiments, e.g., aspects of one embodiment may be combined with aspects of another embodiment to realize yet other embodiments.

## Claims

1. A method for managing electronic records, each electronic record comprising a data file, a plurality of data files, a portion of a data file, or portions of a plurality of data files, the electronic records comprising a plurality of record types and data file types, the method comprising:
forming a data file set comprising one or more logically related data files;
identifying attributes of each record type in a record type template;
identifying specifications of each data file type in a data file type template;
extracting digital components from the data file set, wherein the extracted digital components relate to the attributes in each record type template and the specifications in each data file type template and comprise an individual record.

2. A method according to claim 1, further comprising:
specifying in each record type template characteristics of authenticity of each record type.

3. A method according to claim 1, wherein the data files of the data file set are logically related for purposes of accessing the extracted digital components.

4. A method according to claim 3, wherein accessing the extracted digital components comprises presenting the individual record in human understandable form.

5. A method according to claim 3, wherein accessing the individual record comprises transforming, consolidating, tabulating, formatting, rendering, querying, filtering, and/or interpreting the individual record.

6. A method according to claim 4, wherein presenting the individual record comprises presenting the record perceptible to human senses.

7. A method according to claim 1, wherein the data files of the data file set are logically related by a manner of presentation.

8. A method according to claim 3, wherein the specifications of each data file type comprise instructions for accessing the individual record.

9. A method according to claim 1, wherein the data files of the data file set are logically related by information contained in the data files.

10. A method according to claim 1, further comprising:
extracting default digital components from the data file set when attributes of a record type and/or specifications of a data file type are unavailable.

11. An electronic record archive for managing electronic records, each electronic record comprising a data file, a plurality of data files, a portion of a data file, or portions of a plurality of data files, the electronic records comprising a plurality of record types and data file types, the electronic record archive comprising:
a data file set comprising one or more logically related data files;
a record type template for each record type, each record type template identifying attributes of each record type;
a data file type template for each data file type, each data file type template identifying specifications of each data file type; and
a digital component extractor configured to extract digital components from the data file set, wherein the extracted digital components relate to the attributes in each record type template and the specifications in each data file type template and comprise an individual record.

12. An electronic record archive according to claim 11, wherein each record type template specifies characteristics of authenticity of each record type.

13. An electronic record archive according to claim 11, wherein the data files of the data file set are logically related for purposes of accessing the extracted digital components.

14. An electronic record archive according to claim 13, further comprising an accessing component configured to present the individual record in human understandable form.

15. An electronic record archive according to claim 13, further comprising an accessing component configured to access the individual record by transformation, consolidation, tabulation, formation, rendition, questioning, filtering, and/or interpretation of the individual record.

16. An electronic record archive according to claim 14, wherein the accessing component is configured to present the individual record perceptible to human senses.

17. An electronic record archive according to claim 11, wherein the data files of the data file set are logically related by a manner of presentation.

18. An electronic record archive according to claim 13, wherein the specifications of each data file type comprise instructions for accessing the individual record.

19. An electronic record archive according to claim 11, wherein the data files of the data file set are logically related by information contained in the data files.

20. An electronic record archive according to claim 11,wherein the digital component extractor is configured to extract default digital components from the data file set when attributes of a record type and/or specifications of a data file type are unavailable
